# EUROPEAN PATENT SPECIFICATION

(11) **EP 2 514 997 B1**
(45) Date of publication and mention of the grant of the patent: **14.05.2014**
(21) Application number: 11305464.7
(22) Date of filing: 19.04.2011
(51) Int. Cl.: F16H 25/22

(54) **Ball screw assembly**
Kugelspindelanordnung
Ensemble vis écrou.

(43) Date of publication of application: 24.10.2012
(73) Proprietor: Aktiebolaget SKF, 41 550 Göteborg (SE)
(72) Inventor: Allegri, Eric, 73800 MONTMELLIAN (FR); Durand, Christophe, 73000 BASSENS (FR); Dubus, Jérôme, 37520 LA RICHE (FR); Lescorail, Romuald, 37380 SAINT-LAURENT-EN-GÂTINES (FR)
(74) Representative: Delprat, Olivier

(56) References cited:
- JP-A- 10 196 654
- US-A- 2 855 792
- US-A1- 2010 043 583
- US-A1- 2010 170 359

## Description

The present invention relates to ball screw assemblies or devices. The ball screw assemblies may be, for example, used to displace loads by transforming rotary action into linear motion.

A ball screw assembly generally comprises a nut and an elongated cylindrical screw extending through an opening formed through the nut, the outer surface of said screw and the inner surface of said nut being provided with complementary threads. The assembly further comprises a plurality of balls engaged into both of the threads so as to provide a rolling engagement between the screw and the nut. A ball screw assembly according to the preamble of claim 1 is known from US 2,855,792.

Patent application US-A1-2010/0170359 discloses such a conventional ball screw assembly which also comprises outer recirculating tubes for the balls. Each recirculating tube is formed by two assembled parts delimiting together deflecting channels and a return channel extending between said channels for the recirculation of the balls. The ball screw assembly further comprises holders to secure the recirculating tubes onto the outer surface of the nut.

With such a design, it is necessary to foresee the assembly of at least three parts in order to form and secure each of the recirculating tube. This leads to a complex structure of the ball screw assembly as well as an increase of the mounting cost.

Otherwise, in case of long nut, the manufacturing process of the recirculating tubes may be difficult and the dimension of the return channels may be not enough precise to achieve a good recirculation of the balls.

One aim of the present invention is to overcome these drawbacks.

It is a particular object of the present invention to provide a ball screw device which is simple to manufacture and to assembly, economic while guaranteeing a good recirculation of the balls.

In the invention, the ball screw assembly comprises a screw provided with an outer thread, a nut provided with an inner thread and with first and second holes extending from said thread to an outer surface of said nut, a plurality of balls engaged in both of said outer and inner threads, and means for recirculating the balls between the first and second holes of the nut comprising a return channel and deflecting elements mounted into said holes, each deflecting element delimiting a deflecting channel connected to the return channel and comprising a pick-up and release lug engaged between the inner and outer threads of the screw and of the nut. The recirculating means further comprise first and second caps mounted axially back-to-back to one another, each cap being integrally formed with one of the deflecting elements and delimiting together with the outer surface of the nut the return channel. Each deflecting element delimits together with the corresponding hole of the nut the deflecting channel.

Advantageously, each deflecting element comprises a mounting part engaged into the corresponding hole. Preferably, the cap extends from the mounting part.

In one embodiment, each cap comprises a cap groove to delimit the return channel. The outer surface of the nut may comprise a nut groove radially facing the groove of each cap to delimit the return channel. Each cap may comprise an inner surface bearing against the outer surface of the nut and from which is formed the cap groove.

In one embodiment, the cap is secured onto the nut. The cap may be formed from metal or plastic material.

The return channel may extend axially with regard to a longitudinal axis of the screw. Said channel may have in cross-section a circular profile adapted to the balls.

The caps may be identical to one another, an end surface of one cap bearing against the corresponding end surface of the other cap.

In another aspect of the invention, a linear actuator, according to claim 12, comprises a motor and a ball screw assembly as previously defined, the screw of said assembly being connected to the motor.

The present invention and its advantages will be better understood by studying the detailed description of a specific embodiment given by way of non-limiting example and illustrated by the appended drawings on which:
- Figure 1 is an axial section of a ball screw assembly according to an example of the invention,
- Figure 2 is an exploded perspective view of Figure 1,
- Figure 3 is a side view of the assembly of Figure 1 without a nut,

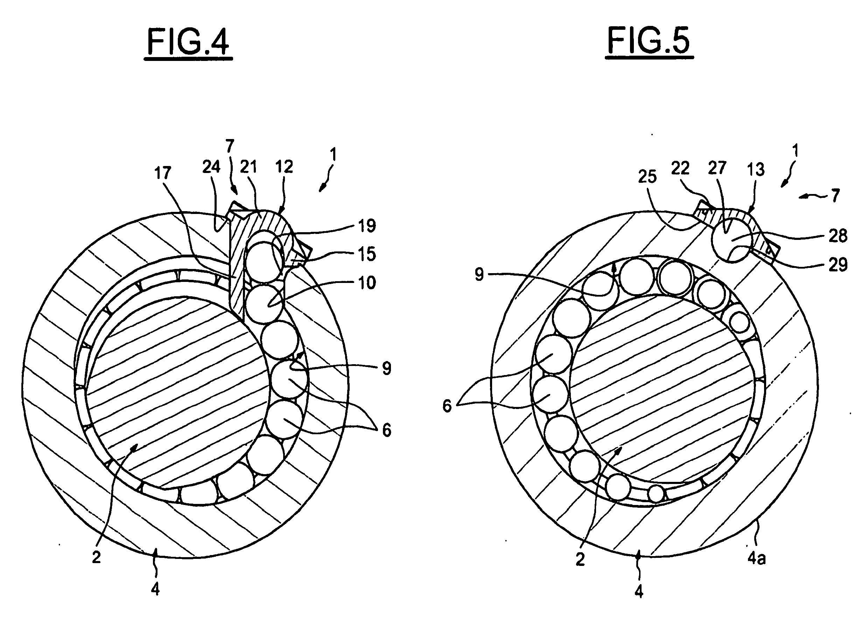

- Figures 4 and 5 are views in radial section of the assembly on IV-IV and V-V of Figure 1,
- Figure 6 is a perspective view of the nut of the assembly of Figure 1,
- Figures 7 and 8 are respectively a side view and an axial section of a deflecting element of the assembly of Figure 1, and
- Figure 9 is an axial section of a linear actuator according to an example of the invention.

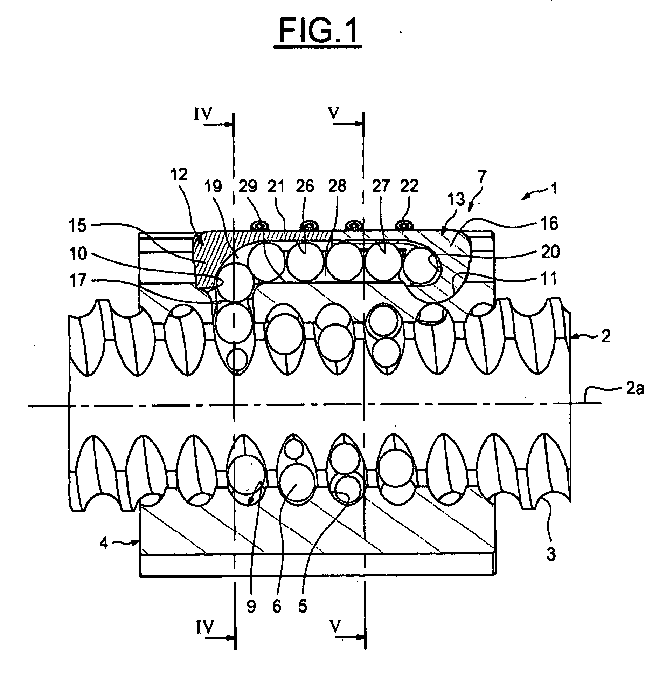

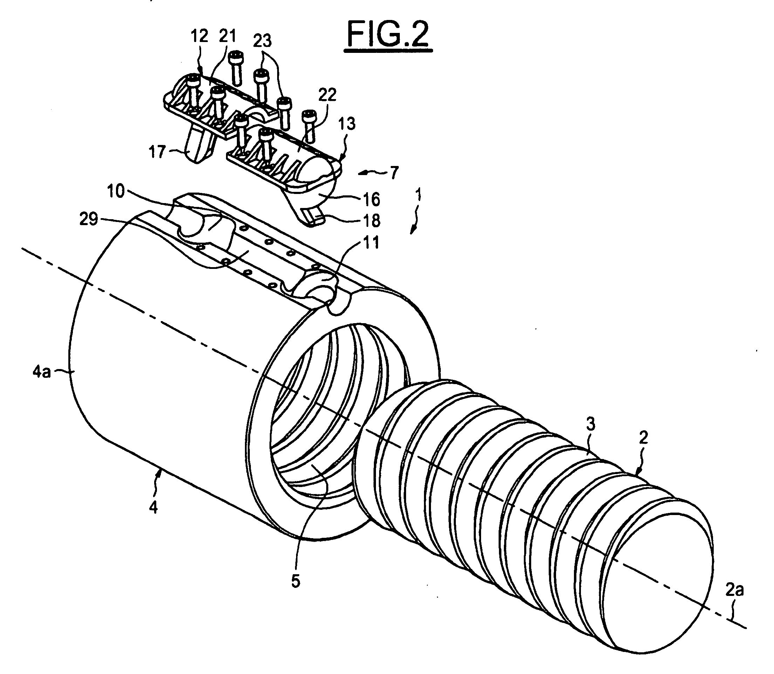

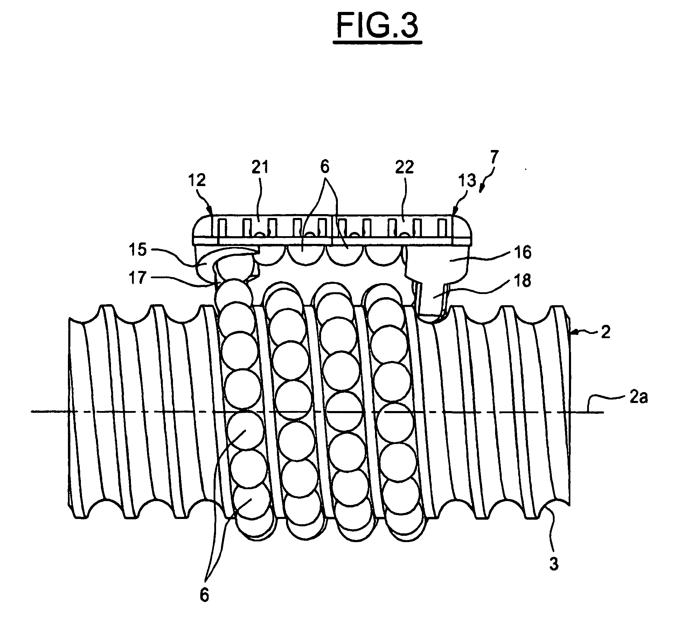

As illustrated on the Figures 1 to 3, which illustrate an embodiment of a ball screw device or assembly 1 according to the invention, the assembly comprises a screw 2 having an outer thread 3, a cylindrical nut 4 having an inner thread 5 whose internal diameter is bigger than the external diameter of the outer thread 3, a plurality of spherical balls 6 for connecting the screw to the nut, and ball recirculating means 7 mounted on the nut. The screw 2 extends along a longitudinal axis 2a through a cylindrical opening of the nut from which is formed the inner thread 5.

Some balls 6 are respectively engaged partly in the outer thread 3 of the screw and partly in the inner thread 5 of the nut. Said balls are engaged on a circulating path 9 of the nut which can be formed along several spires of the outer thread 5. A rotation of the nut 4 relative to the screw 2 is transformed into a longitudinal linear movement along the axis 2a of said screw with respect to the nut because the balls 6 radially disposed therebetween roll along the inner and outer threads 3 and 5 by following the path 9 in the nut. Alternatively, a rotation of the screw 2 relative to the nut 4 causes the translational movement of said nut.

The nut 4 comprises two stepped holes 10, 11 which extend from a cylindrical outer surface 4a of said nut and open into the inner thread 5. The holes 10, 11 extend through the thickness of the nut 4. In the illustrated embodiment, the holes 10, 11 are tilted with respect to a longitudinal plane of the assembly containing the axis 2a in order to be connected tangentially with the inner thread 5 of the nut. The holes 10, 11 extend along two opposite directions.

The recirculating means 7 comprise two deflecting elements 12, 13 mounted into the holes 10, 11 of the nut. The deflecting elements 12, 13 are identical to one another and separated or distinct from the nut 4. Each deflecting element 12, 13 is made in one piece and may be made from plastic material or metal, for instance by moulding.

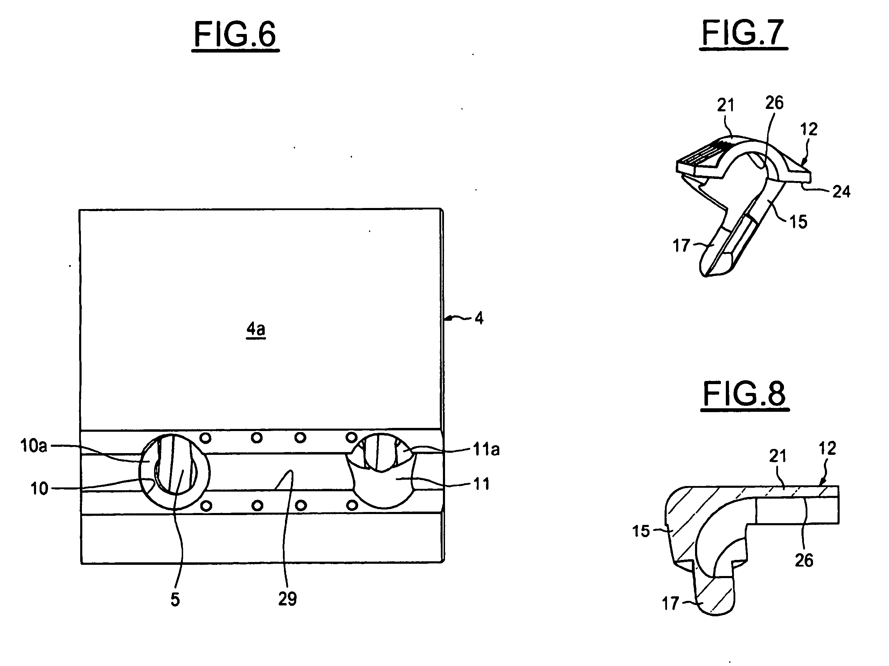

Each deflecting element 12, 13 comprises a cylindrical mounting part 15, 16 mounted in the respective stepped hole 10, 11 and a pick-up and release lug 17, 18 extending from a lower surface of said mounting part. The deflecting elements 12, 13 may be mounted into the corresponding stepped holes 10, 11 from the outside of the nut 4, the lower surfaces of the mounting parts 15, 16 abutting against shoulders 10a, 11a (Figure 6) of said holes. The mounting part 15, 16 is located partly inside the corresponding hole 10, 11 and protrudes radially outside relative to the outer surface 4a of the nut.

The pick-up and release lug 17, 18 of each deflecting element extends radially inwards inside the corresponding hole 10, 11 and across the gap between the outer thread 3 of the screw and the inner thread 5 of the nut. Each lug 17, 18 is mounted into contact with the hole 10, 11 in the circumferential direction and engages into the outer thread 3 of the screw while remaining at a small distance from the flanks of said thread.

Each of the deflecting element 12, 13 delimits together with the respective hole 10, 11a deflecting channel 19, 20 for the balls. Each of the mounting parts 15, 16 comprises a curved guiding groove to form with surfaces of the associated hole 10, 11 opposed lateral parts of said channel. For each deflecting channel 19 and 20, a first end is formed by the free end of the lug 17, 18 inserted into the outer thread 3 of the screw, the second end being delimited by the curved groove of the mounting part 15, 16 and the associated hole 10, 11. The first end of each deflecting channel 19, 20 is tangent to the outer thread 3 of the screw and to the balls 6. The first end of each deflecting channel 19, 20 is connected to one end of the circulating path 9 provided between the screw 2 and the nut 4. At one end of the circulation path 9, the balls 6 meet the lug of one of the deflecting elements 12, 13 and are pick-up or extracted from the circulating path and deviated toward the corresponding deflecting channel 19, 20. At the other end of the circulating path 9, the lug of the other deflecting element 12, 13 reintroduces or releases the balls 6. Each ball 6 makes at least 180° trajectory when passing through the deflecting elements 12 and 13.

Each deflecting element 12, 13 further comprises a cap 21, 22 extending axially from the mounting part 15, 16 and integrally formed with said part. The mounting part 15, 16, the lug 17, 18 and the cap 21, 22 are made in one piece and form the deflecting element 12, 13. Each cap 21, 22 has a semi-tubular shape and is secured onto a flat part of the outer surface 4a by screws 23. The fixation of each of the caps 21, 22 on the nut 4 may be obtained by any other suitable fixing means, for example by gluing.

Each cap 21, 22 comprises a flat inner surface 24, 25 radially bearing against the flat part of the outer surface 4a of the nut. A groove 26, 27 is provided on the inner surface 24, 25 and extends along said surface. The groove 26, 27 is directed radially inwards towards the nut 4. The groove 26, 27 has in cross-section a concave internal profile in the shape of a semi-circle adapted to the balls 6. Advangeously, the radius of curvature of the groove 26, 27 is slightly greater than the radius of the balls 6. The end radial surface of the cap 21 abuts axially against the corresponding end radial surface of the cap 22. The caps 21, 22 are mounted axially in contact to one another, i.e. back-to-back, so that the grooves 26, 27 form a continuous longitudinal straight track or raceway for the balls 6. A first end of the groove 26, 27 is connected to the second end of the associated deflecting channel 19, 20, the second end of said groove being connected to the second end of the other groove.

The caps 21, 22 of the deflecting elements delimit together with the outer surface 4a of the nut a straight return channel 28. The return channel 28 is aligned and connected with the second ends of the deflecting channels 19, 20. The return channel 28 is connected to the deflecting channels 19, 20 and extends therebetween. The curved deflecting channels 19, 20 and the straight return channel 28 define a recirculation channel for the balls 6 extending from one end to the other end of the circulating path 9 provided between the screw 2 and the nut 4. In the illustrated embodiment, the return channel 28 extends axially with regard to the axis 2a of the screw and lies along the longitudinal plane of the assembly containing said axis.

The return channel 28 is delimited by the grooves 26, 27 of the deflecting elements and a groove 29 provided on the flat part of the outer surface 4a of the nut. The groove 29 extends axially onto the outer surface 4d of the nut and passes through the holes 10, 11. The groove 29 has in cross-section a concave internal profile in the shape of a semi-circle adapted to the dimension of the balls 6. The groove 29 is directed radially outwards and forms a longitudinal straight track or raceway for the balls 6. The groove 29 radially faces the grooves 26, 27 of the deflecting elements. The caps 21, 22 of said deflecting elements recovers the part of the groove 29 located axially between the holes 10, 11. The radii of curvature of the grooves 26, 27 and 29 are equal. For instance, the groove 29 may be formed by machining the entire length of the outer surface 4a of the nut, for example by milling, and then ground and optionally lapped in order to give to said groove forming a raceway for the balls its geometric characteristics and its final surface finish.

The grooves 26, 27 of the deflecting elements forming a concave raceway delimit together with the groove 29 of the nut also forming a concave raceway the straight return channel 28. Said channel has in cross-section a circular profile adapted to the balls 6.

By providing a return channel 28 radially between the nut 4 and the outer caps 21, 22 of the deflecting elements, the recirculation of the balls 6 is achieved in a simple, precise and economic way even in case of axial long nut. Besides, with the use of deflecting elements 12, 13 each provided with an integrated cap 21, 22 partly delimiting the return channel 28, the number of components that have to be assembled is reduced. In fact, a single piece or unit performs a dual function, namely deflecting the balls 6 from the circulating path 9 provided between the screw 2 and the nut, and additionally guiding the circulation of said balls on the outer surface 4a of the nut.

Otherwise, with the shape in cross-section of the return channel 28, each ball 6 positioned between the grooves 26, 27 and 29 has a single contact point with said return channel. Therefore, there is less friction when the balls 6 run freely along the return channel 21 and the generation of noise is limited. Alternatively, the return channel 28 may however have in cross-section another profile, for instance a square shape.

In another embodiment, it could be possible to not foresee a concave raceway on the outer surface 4a of the nut in order to delimit the return channel. In this case, the balls 6 roll directly on the cylindrical outer surface of the nut or on a flat part provided on said outer surface to form the rolling surface. The number of machining operations to be done on the nut 4 is thus reduced.

In another variant, it could also be possible to have more pairs of holes and associated deflecting elements on the nut. Alternatively, it could again be possible to have a straight return channel extending along an axis not disposed into the longitudinal plane of the ball screw assembly containing the axis of the screw. In the illustrated embodiment, each deflecting element delimits together with surfaces of the associated hole a deflecting channel for the balls. Alternatively, it might also be possible to foresee deflecting channel entirely formed by the deflecting elements.

In the illustrated embodiment, each deflecting element comprises an integrated cap. Alternatively, it could be possible to foresee a first deflecting element provided with a cap having an increased axial dimension and which abuts against the mounting part of a second deflecting element which is formed by said mounting part and the pick-up and release lug and deprived of cap. A single cap is thus used with a pair of different deflecting elements. In another variant, for instance with parallel holes provided in the thickness of the nut, it might be possible to made in one piece a single cap and two associated deflecting pins, wherein each pin is formed by a mounting part and a pick-up and release lug as previously defined and the cap extends axially between the mounting part.

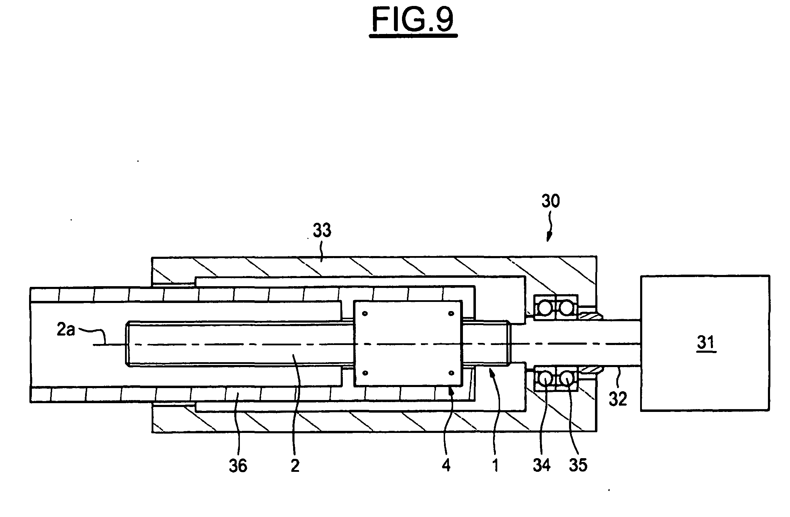

Referring to Figure 9, it will be now described a specific application of the ball screw assembly 1 into a linear actuator. The actuator 30 comprises a driving motor 31 having an output shaft 32 connected by suitable means (not shown) to the screw 2 of the assembly. The shaft 32 and the screw 2 are mounted into a housing 33 of the actuator by two rolling bearings 34, 35, the nut 4 of the assembly carrying a tubular sleeve 36 which may be used to displace loads. When the shaft 32 and the screw 2 rotate, the sleeve 36 translates along the axis 2a.

## Claims

1. Ball screw assembly comprising a screw (2) provided with an outer thread, a nut (4) provided with an inner thread and with first and second holes (10, 11) extending from said thread to an outer surface (4a) of said nut, a plurality of balls (6) engaged in both of said outer and inner threads, and means (7) for recirculating the balls between the first and second holes (10, 11) of the nut comprising a return channel (28) and deflecting elements (12, 13) mounted into said holes, each deflecting element delimiting a deflecting channel (19, 20) connected to the return channel and comprising a pick-up and release lug (17, 18) engaged between the inner and outer threads of the screw and the nut, **characterized in that** the recirculating means further comprise first and second caps (21, 22) mounted axially back-to-back to one another, each cap being integrally formed with one of the deflecting elements and delimiting together with the outer surface (4a) of the nut the return channel (28), each deflecting element (12, 13) delimiting together with the corresponding hole (10, 11) of the nut the deflecting channel (19, 20).

2. Ball screw assembly according to claim 1, wherein each deflecting element (12, 13) comprises a mounting part (15, 16) engaged into the corresponding hole (10, 11).

3. Ball screw assembly according to claim 2, wherein the cap (21, 22) extends from the mounting part.

4. Ball screw assembly according to any of the preceding claims, wherein each cap (21, 22) comprises a cap groove (26, 27) to delimit the return channel (28).

5. Ball screw assembly according to claim 4, wherein the outer surface (4a) of the nut comprises a nut groove (29) radially facing the groove of each cap to delimit the return channel.

6. Ball screw assembly according to claim 4 or 5, wherein each cap comprises an inner surface (24, 25) bearing against the outer surface (4a) of the nut and from which is formed the associated cap groove (26, 27).

7. Ball screw assembly according to any of the preceding claims, wherein the cap (21, 22) is secured onto the nut (4).

8. Ball screw assembly according to any of the preceding claims, wherein the return channel (28) extends axially with regard to a longitudinal axis (2a) of the screw.

9. Ball screw assembly according to any of the preceding claims, wherein the return channel (28) has, in cross-section, a circular profile adapted to the balls.

10. Ball screw assembly according to any of the preceding claims, wherein the cap is formed from metal or plastic material.

11. Ball screw assembly according to any of the preceding claims, wherein the caps are identical to one another, an end surface of one cap bearing against the corresponding end surface of the other cap.

12. Linear actuator comprising a motor and a ball screw assembly according to any of the preceding claims, the screw of said assembly being connected to the motor.

## Patentansprüche

1. Kugelspindelanordnung, aufweisend eine Spindel (2), die mit einem Außengewinde versehen ist, eine Mutter (4), die mit einem Innengewinde und mit ersten und zweiten Löchern (10, 11) versehen ist, welche vom Gewinde zu einer Außenfläche (4a) der Mutter verlaufen, mehrere Kugeln (6), die im Außengewinde wie auch im Innengewinde in Eingriff genommen sind, und Mittel (7) zum Umlaufen der Kugeln zwischen den ersten und zweiten Löchern (10, 11) der Mutter, aufweisend einen Rückführkanal (28) und Ablenkelemente (12, 13), die in die Löcher montiert sind, wobei jedes Ablenkelement einen Ablenkkanal (19, 20) begrenzt, der mit dem Rückführkanal verbunden ist, und einen Aufnahme- und Freigabeansatz (17, 18) aufweist, welcher zwischen dem Innen- und Außengewinde der Spindel und der Mutter in Eingriff genommen ist, **dadurch gekennzeichnet, dass** die Umlaufmittel ferner erste und zweite Kappen (21, 22) aufweisen, die axial Rücken an Rücken aneinander angebracht sind, wobei jede Kappe einstückig mit einem der Ablenkmittel ausgebildet ist und zusammen mit der Außenfläche (4a) der Mutter den Rückführkanal (28) begrenzt, wobei jedes Ablenkelement (12, 13) zusammen mit dem entsprechenden Loch (10, 11) der Mutter den Ablenkkanal (19, 20) begrenzt.

2. Kugelspindelanordnung nach Anspruch 1, wobei jedes Ablenkelement (12, 13) ein Montageteil (15, 16) aufweist, das im entsprechenden Loch (10, 11) in Eingriff gebracht ist.

3. Kugelspindelanordnung nach Anspruch 2, wobei die Kappe (21, 22) vom Montageteil verläuft.

4. Kugelspindelanordnung nach einem der vorhergehenden Ansprüche, wobei jede Kappe (21, 22) eine Kappennut (26, 27) zum Begrenzen des Rückführkanals (28) aufweist.

5. Kugelspindelanordnung nach Anspruch 4, wobei die Außenfläche (4a) der Mutter eine Mutternut (29) aufweist, die der Nut jeder Kappe zum Begrenzen des Rückführkanals radial zugekehrt ist.

6. Kugelspindelanordnung nach einem der Ansprüche 4 oder 5, wobei jede Kappe eine Innenfläche (24, 25) aufweist, die an die Außenfläche (4a) der Mutter drückt, und aus der die zugehörige Kappennut (26, 27) ausgebildet ist.

7. Kugelspindelanordnung nach einem der vorhergehenden Ansprüche, wobei die Kappe (21, 22) auf der Mutter (4) befestigt ist.

8. Kugelspindelanordnung nach einem der vorhergehenden Ansprüche, wobei der Rückführkanal (28) axial bezüglich einer Längsachse (2a) der Spindel verläuft.

9. Kugelspindelanordnung nach einem der vorhergehenden Ansprüche, wobei der Rückführkanal (28) im Querschnitt ein kreisförmiges Profil aufweist, das an die Kugeln angepasst ist.

10. Kugelspindelanordnung nach einem der vorhergehenden Ansprüche, wobei die Kappe aus Metall oder Kunststoffmaterial ausgebildet ist.

11. Kugelspindelanordnung nach einem der vorhergehenden Ansprüche, wobei die Kappen miteinander identisch sind, wobei eine Endfläche einer Kappe an die entsprechende Endfläche der anderen Kappe drückt.

12. Linearaktor, aufweisend einen Motor und eine Kugelspindelanordnung nach einem der vorhergehenden Ansprüche, wobei die Spindel der Anordnung mit dem Motor verbunden ist.

## Revendications

1. Ensemble de vis à billes comprenant une vis (2) pourvue d'un filetage extérieur, un écrou (4) pourvu d'un filetage intérieur et comprenant des premier et deuxième trous (10, 11) s'étendant à partir dudit filetage jusqu'à une surface extérieure (4a) dudit écrou, une pluralité de billes (6) engagées dans les deux dits filetages extérieur et intérieur, et des moyens (7) de recirculation des billes entre les premier et deuxième trous (10, 11) de l'écrou, comprenant un canal de retour (28) et des moyens de déviation (12, 13) montés à l'intérieur desdits trous, chaque élément de déviation délimitant un canal de déviation (19, 20) relié au canal de retour et comprenant une patte de préhension et de libération (17, 18) engagée entre les filetages intérieur et extérieur de la vis et de l'écrou, **caractérisé en ce que** les moyens de recirculation comprennent en outre des premier et deuxième capots (21, 22) montés axialement dos à dos l'un par rapport à l'autre, chaque capot étant formé monobloc avec l'un des éléments de déviation et délimitant, conjointement avec la surface extérieure (4a) de l'écrou, le canal de retour (28), chaque élément de déviation (12, 13) délimitant, conjointement avec le trou correspondant (10, 11) de l'écrou, le canal de déviation (19, 20).

2. Ensemble de vis à billes selon la revendication 1, dans lequel chaque élément de déviation (12, 13) comprend une partie de montage (15, 16) engagée à l'intérieur du trou correspondant (10, 11).

3. Ensemble de vis à billes selon la revendication 2, dans lequel le capot (21, 22) s'étend à partir de la partie de montage.

4. Ensemble de vis à billes selon l'une quelconque des revendications précédentes, dans lequel chaque capot (21, 22) comprend une rainure de capot (26, 27) pour délimiter le canal de retour (28).

5. Ensemble de vis à billes selon la revendication 4, dans lequel la surface extérieure (4a) de l'écrou comprend une rainure d'écrou (29) radialement en regard de la rainure de chaque capot pour délimiter le canal de retour.

6. Ensemble de vis à billes selon la revendication 4 ou 5, dans lequel chaque capot comprend une surface intérieure (24, 25) s'appuyant contre la surface extérieure (4a) de l'écrou et à partir de laquelle est formée la rainure de capot (26, 27) associée.

7. Ensemble de vis à billes selon l'une quelconque des revendications précédentes, dans lequel le capot (21, 22) est fixé sur l'écrou (4).

8. Ensemble de vis à billes selon l'une quelconque des revendications précédentes, dans lequel le canal de retour (28) s'étend axialement par rapport à un axe longitudinal (2a) de la vis.

9. Ensemble de vis à billes selon l'une quelconque des revendications précédentes, dans lequel le canal de retour (28) présente, en section transversale, un profil circulaire adapté aux billes.

10. Ensemble de vis à billes selon l'une quelconque des revendications précédentes, dans lequel le capot est formé à partir de métal ou d'un matériau plastique.

11. Ensemble de vis à billes selon l'une quelconque des revendications précédentes, dans lequel les capots sont identiques l'un à l'autre, une surface d'extrémité d'un capot s'appuyant contre la surface d'extrémité correspondante de l'autre capot.

12. Actionneur linéaire comprenant un moteur et un ensemble de vis à billes selon l'une quelconque des revendications précédentes, la vis dudit ensemble étant reliée au moteur.
